# EUROPÄISCHE PATENTANMELDUNG

(11) **EP 3 828 758 A1**
(43) Veröffentlichungstag der Anmeldung: **02.06.2021**
(21) Anmeldenummer: 20208469.5
(22) Anmeldetag: 18.11.2020
(51) Int. Cl.: G06K 9/00, G06K 9/62, G06N 3/04, G06N 3/08

(54) **OBJEKTKLASSIFIZIERUNGSVERFAHREN, OBJEKTKLASSIFIZIERUNGSSCHALTUNG, KRAFTFAHRZEUG**

(30) Priorität: 29.11.2019 DE 102019218613
(71) Anmelder: VOLKSWAGEN AG, 38440 Wolfsburg (DE)
(72) Erfinder: Schlicht, Peter, 38442 Wolfsburg (DE); Schmidt, Nico Maurice, 10719 Berlin (DE)

(57) **Zusammenfassung**

Die vorliegende Erfindung betrifft ein Objektklassifizierungsverfahren (1), umfassend:
Klassifizieren (2) eines Objekts basierend auf Sensordaten eines Sensors (12), wobei das Klassifizieren auf einem Training einer künstlichen Intelligenz beruht, wobei das Training umfasst:
Erhalten von ersten Sensordaten, welche indikativ sind für das Objekt;
Erhalten von zweiten Sensordaten, welche indikativ sind für das Objekt, wobei zwischen den ersten und zweiten Sensordaten eine Teilsymmetrie vorliegt;
Erkennen der Teilsymmetrie; und
Erstellen einer Objektklasse basierend auf der erkannten Teilsymmetrie.

## Beschreibung

Die Erfindung betrifft ein Objektklassifizierungsverfahren, eine Objektklassifizierungsschaltung, und ein Kraftfahrzeug.

Generell sind Objektklassifizierungsverfahren bekannt, welche auf einer künstlichen Intelligenz beruhen bzw. welche von einer künstlichen Intelligenz durchgeführt werden.

Solche Verfahren können beispielsweise in einem automatisierten Fahren, bei Fahrerassistenzsystemen, und dergleichen Anwendung finden.

Tiefe neuronale Netze können Sensorrohdaten (beispielsweise von Kamera, Radar, Lidar) verarbeiten, um relevante Informationen daraus abzuleiten.

Solche Informationen können beispielsweise eine Art, eine Position, ein Verhalten eines Objekts, und dergleichen betreffen. Darüber hinaus kann auch eine Fahrzeuggeometrie und/oder eine Fahrzeugtopologie erkannt werden.

Typischerweise wird in einem Training eines neuronalen Netzes datengetriebenes Parameterfitting ausgeführt.

In solch einem datengetriebenen Parameterfitting kann eine Abweichung (Loss) eines Outputs von einer Grundwahrheit (Ground Truth) ermittelt werden, beispielsweise mit einer Lossfunktion. Die Lossfunktion kann so gewählt werden, dass die zu fittenden Parameter differenzierbar von ihr abhängen.

Auf solch eine Lossfunktion kann ein Gradientenabstieg angewendet werden, bei welchem in einem Trainingsschritt wenigstens ein Parameter des neuronalen Netzes in Abhängigkeit der Ableitung (i.S.v. einer mathematischen Differenzierung) der Lossfunktion angepasst wird.

Solch ein Gradientenabstieg kann (vorgegeben oft) wiederholt werden, bis keine Verbesserung der Lossfunktion mehr erzielt wird oder bis eine Verbesserung der Lossfunktion unterhalb eines vorgegebenen Schwellwertes ist.

Jedoch werden bei solchen bekannten Netzen typischerweise die Parameter ohne Experteneinschätzung und/oder ohne eine semantisch motivierte Modellierung ermittelt.

Dies kann dazu führen, dass solch ein tiefes neuronales Netz für einen Experten intransparent sein kann und eine Berechnung des Netzes nicht (oder nur schwer) interpretierbar ist.

Dies kann zu dem Problem führen, dass ein systematisches Testen und/oder eine formale Verifikation des neuronalen Netzes möglicherweise nicht durchführbar ist.

Des Weiteren kann ein bekanntes tiefes neuronales Netz anfällig für einen Störeinfluss sein (adversial perturbation), sodass eine inkrementelle Änderung eines Inputs zu einer starken Veränderung eines Outputs führen kann.

Darüber hinaus ist es nicht in allen Fällen bekannter neuronaler Netze klar, welche Inputmerkmale in Betracht gezogen werden, weswegen synthetische Daten in bekannten neuronalen Netzen möglicherweise nicht verwendet werden können, bzw. wenn sie verwendet werden, kann es möglicherweise zu einer vergleichsweise schwachen Performanz führen. Darüber hinaus kann eine Ausführung eines bekannten neuronalen Netzes in einer anderen Domäne (beispielsweise Training im Sommer, aber Ausführung im Winter) zu einer schwachen Performanz führen.

Generell ist es bekannt, ein neuronales Netzwerk mit diversen (verschiedenen) Datensätzen zu trainieren, wobei die Datensätze verschiedene Kontexte, verschiedene Quellen (beispielsweise Simulation, Realdaten, verschiedene Sensoren, augmentierte Daten) haben können. Hierbei wird jedoch typischerweise keine Teilsymmetrie zwischen den verschiedenen Datensätzen erkannt.

Darüber hinaus ist Transfer Learning und Domain Adaption bekannt. Hierbei kann ein Algorithmus durch ein weiteres Training und eine spezielle Wahl einer Lossfunktion an eine (nicht weiter kontrollierte) neue Domäne angepasst werden. Beispielsweise kann dafür ein neuronales Netz bzgl. unterschiedlichen Domänen desensibilisiert werden oder durch ein fokussiertes Nachtraining mit einer begrenzten Anzahl an Trainingsbeispielen aus der Zieldomäne.

Hierbei wird jedoch möglicherweise eine Objektklasse nicht zielführend erstellt.

Darüber hinaus ist beispielsweise aus der Offenlegungsschrift DE 10 2016 216 795 A1 ein Verfahren zur Ermittlung von Ergebnisbilddaten bekannt, in welchem Rohbilddaten zur Qualitätsverbesserung durch einen Verarbeitungsalgorithmus weiterverarbeitet werden, wobei der Verarbeitungsalgorithmus durch maschinelles lernen trainiert wird. Bei dem Training wird ein Unterschied zwischen einem Eingangsbild und einem Referenzbild mit Hilfe einer Minimierung einer Kostenfunktion definiert. Somit wird hier keine Teilsymmetrie zwischen ersten und zweiten Sensordaten erkannt, worauf basierend eine Objektklasse erstellt wird.

Des Weiteren ist aus der Offenlegungsschrift DE 10 2018 002 521 A1 ein Verfahren zum Erkennen von Personen basierend auf Sensordaten bekannt. Aus Radarsensordaten werden hierbei Merkmale extrahiert und als Personeneigenschaften bestimmt. Hierbei wird jedoch keine Teilsymmetrie zwischen ersten und zweiten Sensordaten erkannt, worauf basierend eine Objektklasse erstellt wird. Vielmehr ist in besagter Offenlegungsschrift die Objektklasse bereits vorgegeben.

Darüber hinaus ist aus der Gebrauchsmusterschrift DE 20 2018 104 373 U1 eine Vorrichtung zum Betreiben eines maschinellen Lernsystems bekannt, wobei dem maschinellen Lernsystem ein vorgebbares Steuerungsmuster zugewiesen wird, das eine Reihenfolge charakterisiert, nach welcher Schichten des Lernsystems jeweils eine Zwischengröße ermitteln, wobei bei Zuweisen des Steuerungsmusters jeder Verbindung oder jeder Schicht eine Steuergröße zugeordnet wird, die charakterisiert, ob die Zwischengröße der jeweiligen nachfolgenden verbundenen Schichten nach der Reihenfolge oder unabhängig von der Reihenfolge ermittelt wird, wobei in Abhängigkeit des vorgebbaren Steuerungsmusters eine Berechnung einer Ausgangsgröße des maschinellen Lernsystems abhängig von der Eingangsgröße des maschinellen Lernsystems gesteuert wird. Hierbei wird jedoch keine Teilsymmetrie erkannt.

Aufgabe der vorliegenden Erfindung ist es, ein Objektklassifizierungsverfahren, eine Objektklassifizierungsschaltung, und ein Kraftfahrzeug bereitzustellen, welche die oben genannten Nachteile wenigstens teilweise überwindet.

Diese Aufgabe wird durch das erfindungsgemäße Objektklassifizierungsverfahren nach Anspruch 1, die erfindungsgemäße Objektklassifizierungsschaltung nach Anspruch 14, und das erfindungsgemäße Kraftfahrzeug nach Anspruch 15 gelöst.

Nach einem ersten Aspekt umfasst ein erfindungsgemäßes Objektklassifizierungsverfahren: Klassifizieren eines Objekts basierend auf Sensordaten eines Sensors, wobei das Klassifizieren auf einem Training einer künstlichen Intelligenz beruht, wobei das Training umfasst: Erhalten von ersten Sensordaten, welche indikativ sind für das Objekt; Erhalten von zweiten Sensordaten, welche indikativ sind für das Objekt, wobei zwischen den ersten und zweiten Sensordaten eine Teilsymmetrie vorliegt; Erkennen der Teilsymmetrie; und Erstellen einer Objektklasse basierend auf der erkannten Teilsymmetrie.

Nach einem zweiten Aspekt ist eine erfindungsgemäße Objektklassifizierungsschaltung dazu eingerichtet, ein Objektklassifizierungsverfahren nach dem ersten Aspekt auszuführen.

Nach einem dritten Aspekt weist ein erfindungsgemäßes Kraftfahrzeug eine Objektklassifizierungsschaltung nach dem zweiten Aspekt auf.

Weitere vorteilhafte Ausgestaltungen der Erfindung ergeben sich aus den Unteransprüchen und der folgenden Beschreibung bevorzugter Ausführungsbeispiele der vorliegenden Erfindung.

Wie oben diskutiert haben bekannte Verfahren zur Objektklassifizierung den Nachteil, dass sie möglicherweise ungenau sind, beispielsweise indem keine Teilsymmetrie von verschiedenen Datensätzen (beispielsweise Sensordaten) in einem Training erkannt wird.

Es wurde jedoch erkannt, dass ein Erkennen einer Teilsymmetrie zu verbesserten Ergebnissen in einer Objektklassifizierung führen kann.

Außerdem wurde erkannt, dass bekannte Lösungen einen großen Datensatz voraussetzen und eine Skalierung auf verschiedenen Domänen ist möglicherweise nicht oder nur mit großem Aufwand (bspw. komplexer Algorithmus, hohe Rechenleistung, Zeitaufwand) nachweisbar.

Darüber hinaus ist es wünschenswert eine Performanz und eine Korrektheit einer Objektklassifizierung zu verbessern.

Deshalb betreffen manche Ausführungsbeispiele ein Objektklassifizierungsverfahren, umfassend: Klassifizieren eines Objekts basierend auf Sensordaten eines Sensors, wobei das Klassifizieren auf einem Training einer künstlichen Intelligenz beruht, wobei das Training umfasst: Erhalten von ersten Sensordaten, welche indikativ sind für das Objekt; Erhalten von zweiten Sensordaten, welche indikativ sind für das Objekt, wobei zwischen den ersten und zweiten Sensordaten eine Teilsymmetrie vorliegt; Erkennen der Teilsymmetrie; und Erstellen einer Objektklasse basierend auf der erkannten Teilsymmetrie.

Das Klassifizieren kann ein Anwenden eines Algorithmus, ein Abrufen aus einem Speicher oder aus einer Datenbank, und dergleichen, umfassen. Das Klassifizieren kann auf einer Ausgabe, einem Ergebnis, und dergleichen, beruhen, welche in Reaktion auf eine Messung eines Sensors (beispielsweise eine Kamera eines Kraftfahrzeugs) erfolgt.

Der Algorithmus, die Datenbank, der Speicher, und dergleichen kann von einer künstlichen Intelligenz erstellt sein, sodass es in einer Anwendung des erlernten Objektklassifizierungsverfahrens nicht erforderlich ist, dass die künstliche Intelligenz auf einem System vorhanden ist, wodurch vorteilhafterweise Speicherkapazität und Rechenleistung eingespart werden kann.

Darüber hinaus ist vorteilhaft, dass in einem Training genügend Zeit zur Verfügung stehen kann.

Die künstliche Intelligenz (KI) kann beispielsweise Methoden basierend auf maschinellem Lernen, Deep Learning, Explicit Feature, und dergleichen verwenden, wie beispielsweise Mustererkennung, Kantendetektion, eine histogrammbasierte Methode, Musterabgleich (Pattern Matching), Farbabgleich (Color Match), und dergleichen.

Daraus ergibt sich der Vorteil, dass bekannte Methoden zur Erzeugung einer KI verwendet werden können.

In manchen Ausführungsbeispielen umfasst der Lernalgorithmus ein maschinelles Lernen.

Der Lernalgorithmus kann in solchen Ausführungsbeispielen auf wenigstens einem von Scaleinvariant Feature Transform (SIFT), Gray Level Co-occurence Matrix (GLCM), und dergleichen basieren.

Das maschinelle Lernen kann darüber hinaus auf einem Klassifizierungsverfahren beruhen, wie beispielsweise wenigstens eines von Random Forest, Support Vector Machine, Neuronales Netzwerks, Bayesisches Netz, und dergleichen, wobei solche Deep-Learning Verfahren beispielsweise auf wenigstens einem von Autoencoder, Generative Adversarial Network, schwaches Supervised Learning, Boot-Strapping, und dergleichen, basieren können.

Des Weiteren kann das maschinelle Lernen auch auf Data Clustering-Methoden basieren, wie beispielsweise Density-based spatial clustering of applications with noise (DBSCAN), und dergleichen.

Das Supervised Learning kann darüber hinaus auf einem Regressionsalgorithmus, einem Perzeptron, einer Bayes-Klassifizierung, einer Naiver Bayes Klassifizierung, einer Nächste-Nachbarn-Klassifizierung, einem künstlichen neuronalen Netzwerk, und dergleichen, basieren.

So können vorteilhafterweise bekannte Methoden für ein maschinelles Lernen verwendet werden.

Die KI kann in manchen Ausführungsbeispielen ein Faltungsnetz (convolutional neural network) umfassen

Das Objekt kann jedes beliebige Objekt sein, beispielsweise kann es ein in einem Kontext relevantes Objekt sein. Zum Beispiel kann in einem Straßenverkehrskontext ein relevantes Objekt (oder eine Objektklasse) ein (Kraft-)Fahrzeug, ein Fußgänger, ein Straßenschild, und dergleichen sein, während in einem Kontext augmentierter Realität ein relevantes Objekt ein Nutzer, ein Möbelstück, ein Haus, und dergleichen sein kann.

Das Training der künstlichen Intelligenz kann ein Erhalten von ersten Sensordaten (des Sensors) umfassen. Der Sensor kann beispielsweise eine Messung durchführen, welche beispielsweise an einen Prozessor (für die KI) übermittelt wird, beispielsweise in Reaktion auf eine Anfrage des Prozessors (oder der KI). In manchen Ausführungsbeispielen können die ersten Sensordaten auch auf einem Speicher vorhanden sein, auf welchen die KI einen Zugriff haben kann.

Die ersten Sensordaten können indikativ für das Objekt sein, d.h. dass eine Messung des Sensors beispielsweise auf das Objekt gerichtet ist, sodass das Objekt aus den ersten Sensordaten abgeleitet werden kann.

Der Sensor kann beispielsweise eine Kamera sein und die KI kann auf eine Objekterkennung anhand von Bilddaten trainiert werden. In solchen Ausführungsbeispielen kann das Objekt in einer optischen Ebene platziert sein, welche von der Kamera erfasst wird.

Darüber hinaus können zweite Sensordaten erhalten werden, auf eine ähnliche (oder gleiche) Art und Weise wie die ersten Sensordaten oder auf eine andere Art und Weise. Beispielsweise können die ersten Sensordaten in einem Speicher vorliegen, während die zweiten Sensordaten direkt aus einer Messung an die KI übermittelt werden, oder umgekehrt. Die zweiten Sensordaten können von dem gleichen Sensor stammen wie die ersten Sensordaten, jedoch soll die vorliegende Erfindung nicht darauf beschränkt sein. Beispielsweise kann ein erster Sensor eine erste Kamera sein und ein zweiter Sensor eine zweite Kamera. Darüber hinaus ist die vorliegende Erfindung auch nicht darauf beschränkt, dass der erste und der zweite Sensor von einem gleichen Sensortyp sind (beispielsweise Kamera). Der erste Sensor kann beispielsweise eine Kamera sein, während der zweite Sensor ein Radarsensor sein kann, und dergleichen.

Zwischen den ersten und zweiten Sensordaten kann eine Teilsymmetrie vorliegen. Beispielsweise können Eigenschaften und/oder ein Verhalten des Objekts und/oder seiner Umgebung, welche von den ersten und zweiten Sensordaten indiziert werden, gleich oder ähnlich sein.

Beispielsweise kann von einer Kamera ein erstes Bild des Objekts in einer ersten Beleuchtungssituation (beispielsweise Licht an) aufgenommen werden, womit erste Sensordaten generiert werden, woraufhin ein zweites Bild des Objekts in einer zweiten Beleuchtungssituation (beispielsweise Licht aus) aufgenommen werden kann, womit zweite Sensordaten generiert werden. Die Teilsymmetrie kann in diesem Fall das Objekt (und/oder weitere Objekte) sein. Je nach (weiterem) Sensor kann die Teilsymmetrie auch einen Luftdruck, eine Temperatur, eine Position, und dergleichen umfassen.

Die Teilsymmetrie kann beispielsweise anhand eines Vergleichs zwischen den ersten und den zweiten Sensordaten erkannt werden, wobei anhand der erkannten Teilsymmetrie eine Objektklasse zur Objektklassifizierung erstellt wird, wobei in manchen Ausführungsbeispielen auch ein Algorithmus erstellt werden kann, um eine Objektklassifizierung (bzw. eine Objekterkennung) durchzuführen.

Aufgrund der Teilsymmetrie kann eine Funktion (ähnlich wie bei der oben beschriebenen Lossfunktion) entwickelt werden.

Hierbei kann ausgenutzt werden, dass es eine Reihe, einen Satz, eine Vielzahl, und dergleichen, von Transformationen (oder Veränderungen) im möglichen Eingaberaum geben kann, welche die Ausgabe der KI nicht oder nur unterhalb eines vorgegebenen Schwellwerts verändern sollen.

Das Klassifizieren kann in diesem Zusammenhang ein Zuweisen (und/oder ein Zuordnen) eines erkannten Objekts zu der Objektklasse umfassen.

Beispielsweise kann erkannt worden sein, dass sich ein Objekt in einem Sichtfeld einer Kamera befindet. Durch das Klassifizieren des Objekts kann bestimmt werden, um welche Art von Objekt es sich handelt. Beispielsweise kann das Objekt als Kraftfahrzeug klassifiziert werden.

Somit kann vorteilhafterweise eine Identifizierung von einem erkannten Objekt stattfinden, welche über ein einfaches Erkennen des Objekts hinaus geht.

Typischerweise muss die Objektklasse keinen konkreten Namen (wie z.B. Kraftfahrzeug) haben, da die Objektklasse von der künstlichen Intelligenz bestimmt wird. Insofern kann die Objektklasse als abstrakter Datensatz vorliegen.

In manchen Ausführungsbeispielen umfasst die künstliche Intelligenz ein tiefes neuronales Netzwerk, wie hierin beschrieben.

So ergibt sich der Vorteil, dass es nicht notwendig ist, ein beaufsichtigtes Lernen (supervised learning) durchzuführen, wodurch eine Automatisierung möglich wird.

In manchen Ausführungsbeispielen basieren die zweiten Sensordaten auf einer Veränderung der ersten Sensordaten.

Die Veränderung kann eine künstliche Veränderung der ersten Sensordaten sein. Beispielsweise kann eine Manipulation eines Quellcodes, eines Bits, einer Bitsequenz, und dergleichen der ersten Sensordaten zu den zweiten Sensordaten führen. Jedoch ist die vorliegende Erfindung nicht auf eine Manipulation der ersten Sensordaten beschränkt, da, wie oben diskutiert, auch eine zweite Aufnahme (oder Messung) des Sensors (oder eines zweiten Sensors) vorgenommen werden kann, um zweite Sensordaten zu erhalten.

In manchen Ausführungsbeispielen umfasst die Veränderung wenigstens eines von Bilddatenveränderung, semantischer Veränderung und dynamischer Veränderung.

Eine Bilddatenveränderung kann wenigstens eines von Kontrastveränderung (beispielsweise Kontrastverschiebung), Farbveränderung, Farbtiefenveränderung, Bildschärfeveränderung, Helligkeitsveränderung (beispielsweise Helligkeitsanpassung), Sensorrauschen, Positionsveränderung, Rotation, und Verzerrung umfassen.

Das Sensorrauschen kann ein künstliches oder natürliches Rauschen sein mit einem beliebigen Leistungsspektrum. Das Rauschen kann durch eine an den Sensor angelegte Spannung simuliert, aber auch durch Sensordatenmanipulation erreicht werden. Das Rauschen kann beispielsweise Gauß'sches Rauschen, Salt-and-Pepper-Rauschen, Brown'sches Rauschen, und dergleichen umfassen.

Die Positionsveränderung sowie die Rotation (des Sensors, des Objekts und/oder seiner Umgebung) können dazu führen, dass das Objekt aus einem anderen Winkel gemessen bzw. aufgenommen wird.

Die Verzerrung kann beispielsweise durch Benutzen eines anderen Sensors entstehen, durch wenigstens eine andere Linse, und dergleichen.

Hieraus ergibt sich der Vorteil, dass die Anzahl von Inputs an die KI erhöht werden kann, sodass die Teilsymmetrie genauer bestimmt werden kann, wodurch sich eine genauere Objektklassifizierung erreichen lässt.

Eine semantische Veränderung kann wenigstens eines von Beleuchtungsveränderung, Witterungsverhältnisänderung, und Objekteigenschaftsänderung umfassen.

Die Witterungsverhältnisänderung kann beispielsweise eine Änderung einer Niederschlagsmenge, einer Niederschlagsart, einer Sonnenintensität, einer Tageszeit, eines Luftdrucks, und dergleichen umfassen.

Die Objekteigenschaften können beispielsweise Farbe, Kleidung, Art, und dergleichen umfassen.

Generell kann unter einer semantischen Veränderung eine Veränderung eines Kontexts verstanden werden, in dem sich das Objekt befindet, wie beispielsweise auch eine Umgebung. Beispielsweise kann das Objekt sich in den ersten Sensordaten in einem Haus befinden, während es sich in den zweiten Sensordaten auf einer Wiese befindet.

Hieraus ergibt sich der Vorteil, dass die Anzahl von Inputs an die KI erhöht werden kann, sodass die Teilsymmetrie genauer bestimmt werden kann, wodurch sich eine genauere Objektklassifizierung erreichen lässt.

Eine dynamische Veränderung kann wenigstens eines von Beschleunigung, Verzögerung, Bewegung, Witterungsveränderung, und Beleuchtungssituationsveränderung umfassen.

Eine Beschleunigung und/oder eine Verzögerung kann zu einem anderen Sensoreindruck führen als eine konstante (oder gar keine) Bewegung des Sensors bzw. des Objekts und/oder seiner Umgebung, beispielsweise kann ein Einfluss des Dopplereffekts je nach Geschwindigkeit und/oder Beschleunigung eine relevante Auswirkung haben.

Hieraus ergibt sich der Vorteil, dass die Anzahl von Inputs an die KI erhöht werden kann, sodass die Teilsymmetrie genauer bestimmt werden kann, wodurch sich eine genauere Objektklassifizierung erreichen lässt.

Unter solchen Veränderungen (bzw. Transformation des Eingaberaums) kann die KI dazu eingerichtet sein, ein konstantes Ergebnis zu liefern.

Um eine Teilsymmetrie zu erkennen, kann während des Trainings ein Parametrierungsschritt der KI eingestreut werden. Bei solch einem Parametrierungsschritt wird ein vorhandener Sensoreindruck (erste Sensordaten) erfindungsgemäß verändert, sodass zweite Sensordaten entstehen, welche zusammen mit den ersten Sensordaten verarbeitet werden können. Ein Unterschied in den Ergebnissen der Verarbeitung der ersten Sensordaten und der zweiten Sensordaten kann als Fehler gewertet werden, da davon ausgegangen wird, dass das Ergebnis konstant sein soll (bzw. sich in den zweiten Sensordaten bzgl. der ersten Sensordaten nicht verändern soll). Aufgrund des Fehlers kann ein Parameter der KI (bzw. ein Netzparameter eines neuronalen Netzes) angepasst werden, sodass bei einer erneuten Verarbeitung das gleiche Ergebnis geliefert werden kann.

Hierbei können Trainingsdaten verwendet werden, also Daten, welche das zu klassifizierende Objekt umfassen, als auch andere Sensordaten (ohne "Label").

Dies ergibt sich daraus, dass die Teilsymmetrie trainiert wird und keine Funktion der KI.

Somit ergibt sich der Vorteil, dass keine Grundwahrheit (ground truth) notwendig ist, um die KI zu trainieren.

In manchen Ausführungsbeispielen basiert die Veränderung auf einer Sensordatenveränderungsmethode.

Bei einer Sensordatenveränderungsmethode kann ein Sensoreindruck, welcher der KI präsentiert wird, vorteilhafterweise verändert werden, um eine optimierte Bestimmung der Teilsymmetrie zu ermöglichen.

Die Sensordatenveränderungsmethode kann wenigstens eines von Bilddatenverarbeitung, Sensordatenverarbeitung, Style-Transfer-Netz, manuelle Interaktion, und erneute Datenaufnahme umfassen.

Bei einer Bild- und/oder Sensordatenverarbeitung kann eine Helligkeitsanpassung, eine Farbsättigungsanpassung, eine Farbtiefenanpassung, eine Kontrastanpassung, eine Kontrastnormalisierung, eine Bildzuschneidung, eine Bildrotation, und dergleichen angewendet werden.

Ein Style-Transfer-Netz kann ein trainiertes neuronales Netz zur Veränderung spezifischer Bildcharakteristika (beispielsweise eine Veränderung von Tag zu Nacht, von Sonne zu Regen, und dergleichen) umfassen.

So kann das Training vorteilhafterweise zeitoptimiert durchgeführt werden und eine Vielzahl von Bildcharakteristika kann in Betracht gezogen werden, ohne dass diese manuell (oder in der Realität) eingestellt werden müssen (was beispielsweise bei Witterung unter Umständen nicht ohne Weiteres möglich sein kann).

Bei einer manuellen Interaktion kann ein semantisch nicht-relevanter Teil der ersten Sensordaten manuell verändert werden.

Bei einer erneuten Datenaufnahme, wie oben erwähnt, können die zweiten Sensordaten auf einer erneuten Messung beruhen, wobei beispielsweise eine Sensorik verändert wird (beispielsweise ein anderer Sensor als der, welcher die ersten Sensordaten aufnimmt), und/oder wobei beispielsweise ein Inhalt (beispielsweise eine Änderung der Umgebung) verändert wird, und/oder wobei eine Simulationsbedingung verändert wird.

In manchen Ausführungsbeispielen kann die Veränderung ferner auf einer Mischung von wenigstens zwei Sensordatenveränderungsmethoden basieren.

Beispielsweise kann eine bestimmte Anzahl an Iterationen (bzw. Hyperparametern) vorgesehen sein, in denen ein Style-Transfer-Netz angewendet wird und eine bestimmte Anzahl an Iterationen, in denen eine erneute Datenaufnahme angewendet wird.

Eine der beiden (oder beide) Methoden kann dann zur Teilsymmetriebestimmung verwendet werden.

Dadurch ergibt sich der Vorteil, dass die KI stabil und agnostisch gegenüber den Output nicht verändernden Veränderungen wird.

Des Weiteren ergibt sich der Vorteil, dass die Anzahl von Inputs an die KI erhöht werden kann, sodass die Teilsymmetrie genauer bestimmt werden kann, wodurch sich eine genauere Objektklassifizierung erreichen lässt.

Außerdem ergibt sich der Vorteil, dass eine bessere Funktionalität erreicht werden kann, beispielsweise durch Auswendiglernen von Objekten, Overfitting, und dergleichen.

Nach erfolgter Konvergenz des Trainings (d.h. wenn der Output konstant bleibt) kann die KI dazu in der Lage sein, eine Funktion (wie z. B. eine Objektklassifizierung) auszuführen, während sie gleichzeitig vorteilhafterweise dazu in der Lage ist, eine relevante Veränderung von einer nicht-relevanten Veränderung der Sensordaten zu unterscheiden.

So ergibt sich des Weiteren der Vorteil, dass die erlernte Funktion auf eine andere Anwendungsdomäne übertragen werden kann (beispielsweise Änderung der Objektklassen, Anpassung des Umfeldes, und dergleichen), beispielsweise mit einem Transfer-Learning-Algorithmus, und dergleichen.

Dies birgt den Vorteil, dass eine konzeptionelle Domänenanpassung eines neuronalen Netzwerks möglich ist.

In manchen Ausführungsbeispielen basiert die Veränderung ferner auf wenigstens einem von Batch-Processing, variabler Trainingsschrittweite, und variablem Trainingsgewicht.

Bei einem Batch-Processing können während einer Iteration mehrere Sensoreindrücke erhalten werden, beispielsweise können die ersten und zweiten Sensordaten gleichzeitig erhalten werden, wobei zu jedem Sensoreindruck verschiedene Symmetrien erkannt werden. So kann ein Gesamtiterationsfehler bestimmt werden, woraufhin die KI entsprechend angepasst werden kann bzw. sich selbst anpasst, was den Vorteil einer genaueren Objektklassifizierung mit sich bringt.

Bei einer variablen (adaptiven und/oder unterschiedlichen) Trainingsschrittweite und einem variablen (anzupassenden) Trainingsgewicht kann die Lernrate, mit welcher Parameter der KI angepasst werden, für jeden Trainingsinput individuell angepasst werden. Beispielsweise kann eine Lernrate bei einer Veränderung auf Grundlage eines Style-Transfer-Netzes höher eingestellt sein als bei einer Veränderung auf Grundlage einer manuellen Interaktion, und dergleichen.

Darüber hinaus kann die Lernrate abhängig von einem Trainingsfortschritt angepasst werden.

Außerdem können Gewichte, welche in jedem Trainingsschritt angelegt werden, nur an Netzschichten (eines neuronalen Netzes) angepasst werden, welche sich nahe am Input befinden.

In manchen Ausführungsbeispielen umfasst das Training ferner: Erkennen einer nicht-relevanten Veränderung der zweiten Sensordaten bezüglich der ersten Sensordaten; und Markieren der nicht-relevanten Veränderung als Fehler zum Erkennen der Teilsymmetrie.

Die nicht-relevante Veränderung kann auf einem Unterschied (beispielsweise basierend auf einem Vergleich) der zweiten Sensordaten bzgl. Der ersten Sensordaten (oder umgekehrt) basieren, welcher von der KI als Fehler gewertet wird, sodass die Teilsymmetrie (beispielsweise eine Gemeinsamkeit der ersten und zweiten Sensordaten) erkannt werden kann.

In manchen Ausführungsbeispielen umfasst der Sensor wenigstens eines von Kamera, Radar, und Lidar, wie hierin beschrieben.

Die vorliegende Erfindung ist jedoch nicht auf diese Art von Sensoren beschränkt, da sie prinzipiell für jeden Sensor, welcher für eine Objekterkennung bzw. -klassifizierung geeignet ist, angewendet werden kann, wie beispielsweise ein Time-of-Flight-Sensor, und andere Sensoren, welche ein Bild, einen Abstand, eine Tiefe, und dergleichen aufnehmen bzw. bestimmen können.

So ergibt sich der Vorteil einer universellen Anwendbarkeit der vorliegenden Erfindung, da sie in allen Bereichen, in welchen eine KI, insbesondere mit einer Deep-Learning-Fähigkeit, verwendet wird, welche Sensordaten auswertet, wie beispielsweise in den Bereichen Medizintechnik, Medizinrobotik, (automatische) Luft-, Schienen-, Schiff-, Raumfahrt, (automatischer) Straßenverkehr, Fahrzeuginnenraumbeobachtung, Produktionsrobotik, Kl-Entwicklung, und dergleichen.

In manchen Ausführungsbeispielen kann der Fehler (und dadurch die Teilsymmetrie) auch anhand von Unterschieden in Zwischenberechnungen der KI (beispielsweise Aktivierungsmuster von Netzschichten eines neuronalen Netzwerks) zwischen verschieden veränderten ersten und zweiten Sensordaten bestimmt werden.

Manche Ausführungsbeispiele betreffen eine Objektklassifizierungsschaltung, welche dazu eingerichtet ist, ein erfindungsgemäßes Objektklassifizierungsverfahren auszuführen.

Die Objektklassifizierungsschaltung kann einen Prozessor, wie beispielsweise eine CPU (Central, Processing Unit), eine GPU (Graphic Processing Unit), ein FPGA (Field Programmable Gate Array), umfassen, sowie einen Datenspeicher, einen Computer, einen (oder mehrere) Server, ein Steuergerät, einen zentralen Bordcomputer, und dergleichen, wobei auch Kombinationen der genannten Elemente möglich sind.

Die Objektklassifizierungsschaltung kann eine erfindungsgemäße KI enthalten und/oder einen Algorithmus zur Objektklassifizierung, welcher auf einem erfindungsgemäßen Training einer KI basiert, aufweisen, ohne dass die KI notwendigerweise von der Objektklassifizierungsschaltung aufgewiesen werden muss, wodurch vorteilhafterweise Rechenleistung eingespart werden kann.

Manche Ausführungsbeispiele betreffen ein Kraftfahrzeug, welches eine erfindungsgemäße Objektklassifizierungsschaltung aufweist.

Das Kraftfahrzeug kann jedes beliebige durch einen Motor (z. B. Verbrennungsmaschine, Elektromaschine, etc.) betriebene Fahrzeug bezeichnen, wie zum Beispiel ein Automobil, ein Motorrad, einen Lastkraftwagen, einen Omnibus, land- oder forstwirtschaftliche Zugmaschinen, und dergleichen, wobei, wie oben beschrieben, die vorliegende Erfindung nicht auf ein Kraftfahrzeug beschränkt sein soll.

In solchen Ausführungsbeispielen kann eine erfindungsgemäße Objektklassifizierung beispielsweise in einem Straßenverkehr stattfinden zur Erkennung von Hindernissen, anderen Kraftfahrzeugen, Straßenschildern, und dergleichen, wobei, wie oben erwähnt, die vorliegende Erfindung nicht auf solch eine Art der Objektklassifizierung beschränkt sein soll.

Beispielsweise kann auch ein Mobiltelefon, Smartphone, Tablet, Smartglasses, und dergleichen, eine erfindungsgemäße Objektklassifizierungsschaltung aufweisen, beispielsweise im Kontext von Augmented Reality, Virtual Reality, oder anderen bekannten Objektklassifizierungskontexten.

Manche Ausführungsbeispiele betreffen ein System zum maschinellen Lernen, welches mit einem erfindungsgemäßen Training trainierbar ist.

Das System kann einen Prozessor, und dergleichen umfassen, auf welchem eine künstliche Intelligenz implementiert ist, wie sie hierin beschrieben ist.

Das erfindungsgemäße Training kann ein Trainingsverfahren sein, welches umfasst: Erhalten von ersten Sensordaten, welche indikativ sind für das Objekt; Erhalten von zweiten Sensordaten, welche indikativ sind für das Objekt, wobei zwischen den ersten und zweiten Sensordaten eine Teilsymmetrie vorliegt; Erkennen der Teilsymmetrie; und Erstellen einer Objektklasse basierend auf der erkannten Teilsymmetrie.

In manchen Ausführungsbeispielen kann eine Steuereinheit in dem System vorgesehen sein, welches, in manchen Ausführungsbeispielen, in dem Training direkt verwendet wird. So können nicht nur die ersten Sensordaten, sondern auch die zweiten Sensordaten (gleichzeitig) verarbeitet werden, wobei ein Label (beispielsweise Grundwahrheit) in jeder Iteration das gleiche sein kann.

Hierbei kann der entstehende Fehler summiert werden und für eine Anpassung der KI (beispielsweise Netzparameter) verwendet werden, was vorteilhafterweise in einem Schritt durchgeführt werden kann, wodurch Rechenleistung eingespart werden kann.

Ausführungsbeispiele der Erfindung werden nun beispielhaft und unter Bezugnahme auf die beigefügte Zeichnung beschrieben, in der:
Fig. 1 schematisch ein Ausführungsbeispiel eines erfindungsgemäßen Objektklassifizierungsverfahrens in einem Blockdiagramm; und
Fig. 2 ein erfindungsgemäßes Kraftfahrzeug in einem Blockdiagramm zeigt.

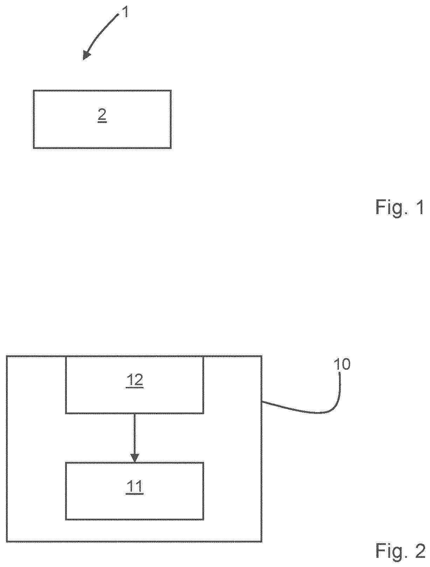

Ein Ausführungsbeispiel eines erfindungsgemäßen Objektklassifizierungsverfahrens 1 ist in Fig. 1 in einem Blockdiagramm gezeigt.

In 2 wird ein Objekts basierend auf Sensordaten eines Sensors klassifiziert, wobei das Klassifizieren auf einem Training einer künstlichen Intelligenz beruht, wobei das Training umfasst: Erhalten von ersten Sensordaten, welche indikativ sind für das Objekt; Erhalten von zweiten Sensordaten, welche indikativ sind für das Objekt, wobei zwischen den ersten und zweiten Sensordaten eine Teilsymmetrie vorliegt; Erkennen der Teilsymmetrie; und Erstellen einer Objektklasse basierend auf der erkannten Teilsymmetrie, wie hierin beschrieben.

Fig. 2 zeigt ein erfindungsgemäßes Kraftfahrzeug 10, welches eine erfindungsgemäße Objektklassifizierungsschaltung 11 aufweist.

Darüber hinaus weist das Kraftfahrzeug eine Kamera (Sensor) 12 auf, welche der Objektklassifizierungsschaltung 11 Bilddaten (Sensordaten) bereitstellt, wobei die Objektklassifizierungsschaltung 11 einen Algorithmus implementiert hat, welcher auf einem Training einer KI, wie hierin beschrieben, basiert, wodurch die Objektklassifizierungsschaltung 11 dazu eingerichtet ist, eine erfindungsgemäße Objektklassifizierung anhand der Bilddaten auszuführen.

### Bezugszeichenliste

- 1: Objektklassifizierungsverfahren
- 2: Klassifizieren eines Objekts anhand von Sensordaten
- 10: Kraftfahrzeug
- 11: Objektklassifizierungsschaltung
- 12: Kamera (Sensor)

## Patentansprüche

1. Objektklassifizierungsverfahren (1), umfassend:
Klassifizieren (2) eines Objekts basierend auf Sensordaten eines Sensors (12), wobei das Klassifizieren auf einem Training einer künstlichen Intelligenz beruht, wobei das Training umfasst:
Erhalten von ersten Sensordaten, welche indikativ sind für das Objekt;
Erhalten von zweiten Sensordaten, welche indikativ sind für das Objekt, wobei zwischen den ersten und zweiten Sensordaten eine Teilsymmetrie vorliegt;
Erkennen der Teilsymmetrie; und
Erstellen einer Objektklasse basierend auf der erkannten Teilsymmetrie.

2. Objektklassifizierungsverfahren (1) nach Anspruch 1, wobei die künstliche Intelligenz ein tiefes neurales Netzwerk umfasst.

3. Objektklassifizierungsverfahren (1) nach einem der vorherigen Ansprüche, wobei die zweiten Sensordaten auf einer Veränderung der ersten Sensordaten basieren.

4. Objektklassifizierungsverfahren (1) nach Anspruch 3, wobei die Veränderung wenigstens eines von Bilddatenveränderung, semantische Veränderung und dynamische Veränderung umfasst.

5. Objektklassifizierungsverfahren (1) nach Anspruch 4, wobei die Bilddatenveränderung wenigstens eines von Kontrastverschiebung, Farbveränderung, Farbtiefenveränderung, Bildschärfeveränderung, Helligkeitsveränderung, Sensorrauschen, Positionsveränderung, Rotation, und Verzerrung umfasst.

6. Objektklassifizierungsverfahren (1) nach einem der Ansprüche 4 und 5, wobei die semantische Veränderung wenigstens eines von Beleuchtungsveränderung, Witterungsverhältnisänderung, und Objekteigenschaftsänderung umfasst.

7. Objektklassifizierungsverfahren (1) nach einem der Ansprüche 4 bis 6, wobei die dynamische Veränderung wenigstens eines von Beschleunigung, Verzögerung, Bewegung, Witterungsveränderung, und Beleuchtungssituationsveränderung umfasst.

8. Objektklassifizierungsverfahren (1) nach einem der Ansprüche 3 bis 7, wobei die Veränderung auf einer Sensordatenveränderungsmethode basiert.

9. Objektklassifizierungsverfahren (1) nach Anspruch 8, wobei die Sensordatenveränderungsmethode wenigstens eines von Bilddatenverarbeitung, Sensordatenverarbeitung, Style-Transfer-Netz, manuelle Interaktion, und erneute Datenaufnahme umfasst.

10. Objektklassifizierungsverfahren (1) nach Anspruch 9, wobei die Veränderung ferner auf einer Mischung von wenigstens zwei Sensordatenveränderungsmethoden basiert.

11. Objektklassifizierungsverfahren (1) nach einem der Ansprüche 9 und 10, wobei die Veränderung ferner auf wenigstens einem von Batch-Processing, variabler Trainingsschrittweite, und variablem Trainingsgewicht basiert.

12. Objektklassifizierungsverfahren (1) nach einem der vorherigen Ansprüche, wobei das Training ferner umfasst:
Erkennen einer nicht-relevanten Veränderung der zweiten Sensordaten bezüglich der ersten Sensordaten; und
Markieren der nicht relevanten Veränderung als Fehler zum Erkennen der Teilsymmetrie.

13. Objektklassifizierungsverfahren (1) nach einem der vorherigen Ansprüche, wobei der Sensor (12) wenigstens eines von Kamera, Radar, Lidar, umfasst.

14. Objektklassifizierungsschaltung (11), welche dazu eingerichtet ist, ein Objektklassifizierungsverfahren (1) nach einem der vorherigen Ansprüche auszuführen.

15. Kraftfahrzeug (10), welches eine Objektklassifizierungsschaltung (11) nach Anspruch 14 aufweist.
